# EUROPEAN PATENT APPLICATION

(11) **EP 0 840 532 A2**
(43) Date of publication of application: **06.05.1998**
(21) Application number: 97119163.0
(22) Date of filing: 03.11.1997
(51) Int. Cl.: H04Q 7/28, H04Q 7/38

(54) **A method of base-site selection in a communications system and apparatus**

(30) Priority: 05.11.1996 GB 9623003
(71) Applicant: MOTOROLA ISRAEL LIMITED, Tel Aviv 67899 (IL)
(72) Inventor: Bar-On, David, Rehovot 76212 (IL); Carmon, Rafy, Holon, Israel (IL)
(74) Representative: Morgan, Marc

(57) **Abstract**

In a radio communications system utilising a number of base-sites to provide coverage over a large geographical area a mobile radio will select the base-site to utilise from a set of available sites. The selection is based on the rate of decline of the signal strength thus enabling the rapid selection of the most appropriate base-site to use. This method is especially useful where there are zones of difficult reception such as tunnels.

## Description

### Field of the Invention

This invention relates to a method of cell selection in a communications system and apparatus. The invention is particularly applicable to mobile radio or cellular telephony systems.

### Background of the Invention

For efficient use of the available radio frequency spectrum, geographical areas are divided into cells served by base-sites operating at particular frequencies. The frequencies are allocated such that different frequencies are chosen for adjacent cells.

A mobile radio or cellular telephone travelling through the geographical area will communicate via the base-site of the cell within which it is located. This will be the cell offering the best signal strength. The cell used will change as the mobile travels and a so called 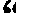 hand-off 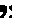 method is used.

One hand-off method used involves the mobile detecting transmissions from base-sites of the adjacent cells. Information about the cells so detected is stored in a memory of the mobile as a list. If the signal strength of the current base-site is dropping then the mobile realises that a new site may have to be chosen. Thus, it selects a new site from the list of detected possible sites which offers the strongest signal.

### Brief Summary of the Invention

In a broadest aspect of the invention there is provided a method of base-site selection in a radio communication system comprising determining a rate of received signal strength variation and selecting a base-site from a set of potential base-sites in accordance with the rate determined.

According to the invention there is provided a method of base-site selection for use in a radio communication system comprising a plurality of base-sites and at least one mobile radio unit which method comprising: providing a set of potential base-sites with which the mobile radio unit may establish communication; determining a rate of change of a received signal strength for signals between the base-site and the mobile radio unit; ordering the set of potential base-sites into an order in response to the determined rate; and attempting to communicate between the mobile radio unit and at least one of the set by successively attempting to establish communication with the base-sites of the set in the order.

By selecting the base-site to be utilised based on the rate of change of the received signal strength the most appropriate site to use will be more rapidly selected without the need to attempt connection to a large list of potential sites. This is particularly advantageous where the site to be selected serves a poor reception area such as a tunnel.

In an embodiment of the invention the hand-off between cells is much more rapid than would otherwise be the case because of the use of a list for the poor reception areas. Thus, the disruption caused to a user's call is reduced.

The invention also provides apparatus.

### Brief Description of the Drawings

A specific embodiment of the invention will now be described, by way of example only, with reference to the drawings in which:
Figure 1 shows in schematic form a communications system operating in accordance with the invention;
Figure 2 shows in schematic block diagram form a mobile radio operating in the system shown in Fig. 1;
Figures 3, 5 and 6 show memory structures utilised in the mobile radio of Fig. 2; and
Figures 4 and 7 are explanatory diagrams.

### Detailed Description of Preferred Embodiment

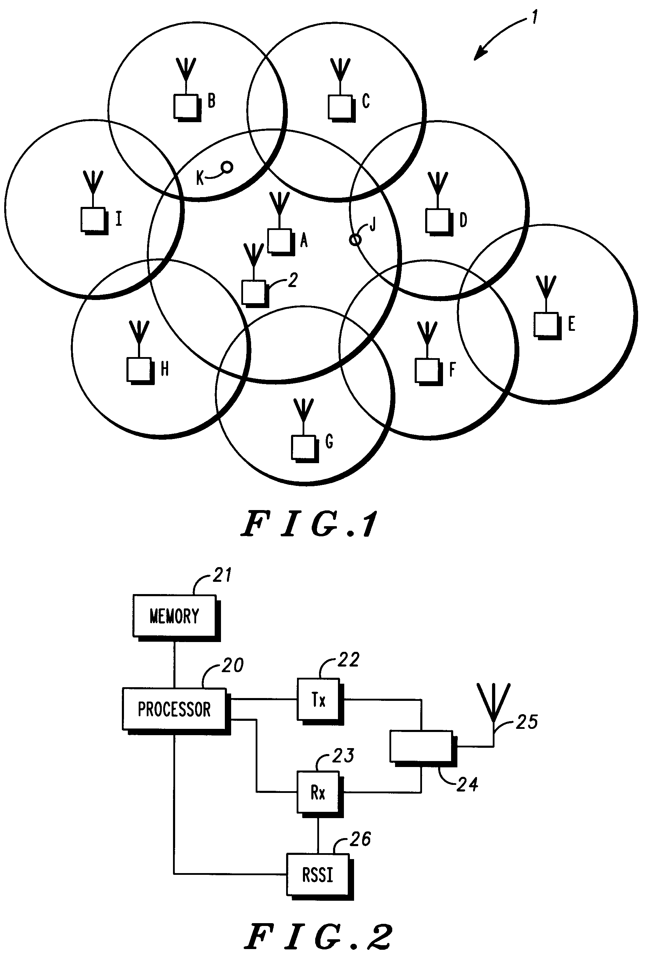

Figure 1 shows a communication system 1 operating in accordance with the invention comprising a number of base-stations providing cells A to J. The system is a TETRA system.

A mobile 2 is one of many mobiles served by the base-sites. As the mobile travels through the system 1 it will communicate the most appropriate base-site. Typically this will be a base-site serving the cell within which the mobile is currently located.

The mobile 2 is shown in Figure 2 and it comprises a processor 20, a memory 21, a transmitter module 22, a receiver module 23, an antenna switch 24 (not essential in a TDMA system), an antenna 25, and a received signal strength indicator (RSSI) 26.

As will be readily appreciated by a man skilled in the art, the processor 20 will be a microprocessor semiconductor chip linked to the memory 21 and the other modules by a control and a data bus.

The memory 21 will be provided as ROM and RAM and will store a program controlling the operation of the mobile.

The memory 21 will also hold a preference table which is depicted in Figure 3. The preference table comprises a set of site identifiers and a corresponding preference rating.

Upon entry of a mobile into a cell the set is transmitted from the base-station to the mobile. It provides information to the mobile about the next cells it is likely to encounter as it travels from that cell to its neighbours. Typically this information will include the frequency band of the base-site enabling communication to be established by the mobile switching its receiver and transmitter to the appropriate site.

As the mobile travels through a cell, the received signal strength will vary. If it reduces to a threshold, the mobile will select the next site on the list. Thus, if the current site is site A with reference to the preference table it will be seen that the next site in order of preference is site B.

The mobile will then attempt to establish connection to that site. If successful, it will disconnect from site A. If unsuccessful, it will try the next site, site C and so on down the list of sites.

Thus, as a mobile travels through the sites in a system it will experience a received signal strength (RSS) as depicted in Figure 4. The RSS will fall from a maximum value to a minimum at T₁ where a new site is selected. The RSS will then rise towards the maximum but then as the mobile travels away from the new base-site it will experience a decline in the signal. At T₃ a new site is chosen. This hand-off process is thus far conventional.

The processor 20 is provided by the RSSI 26 the RSS and determines a rate of change. The rate of change will be relatively slow for the transition from sites.

However site J in a special site serving a tunnel. Utilising the prior art approach, the mobile when entering the tunnel will attempt connection to sites B to I successively and then attempt connection to site J. Given, that J is at the end of the list it will be appreciated that the most likely outcome of this process is that the call will be lost or that at the very least there will be a significant disturbance to the connection. A similar effect will occur when the mobile leaves the tunnel.

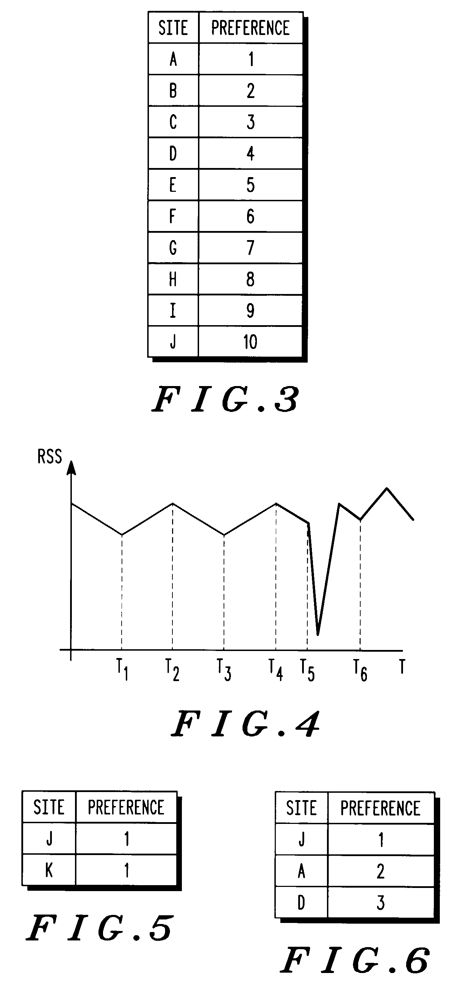

However, when operating in accordance with the invention the mobile upon detecting a rapid change of RSS (such as the drop shown at T5 of Fig. 4) selects a further list from memory as the basis for site connection attempts. The further list is depicted in Figure 5. This list will then be used for attempts to establish connection but if all the attempts are unsuccessful the first list will be used.

On the basis of this list, the rapid change in RSS causes a connection attempt to be made to site J which is the appropriate site. The base-site J then transmits a further preference set as shown in Figure 6. This provides the mobile with the next set of sites should RSS fall rapidly again. This occurs when the mobile leaves that tunnel and enters the next cell.

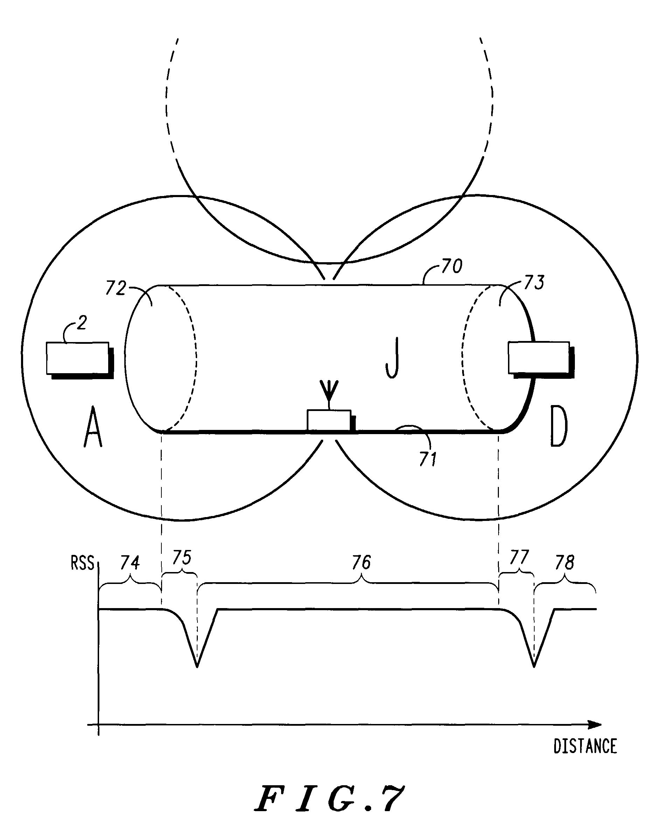

Thus, the situation is as depicted in Figure 7. Figure 7 depicts the cells A, J and D. Cell J is located within a tunnel indicated by lines 70, 71 having mouths 71 and 73. The cell J extends beyond the mouths 72, 73 but only for a matter of meters before the RSS is such that hand-off is necessary. Similarly cells A and D extend into the tunnel for a few meters as indicated by the broken outline.

An explanatory graph is shown in the figure showing how the RSS varies as the mobile approaches enters, travels along and then exits the tunnel. For convenience in the depiction, the distance represented on the horizontal axis coincides with that travel by the mobile.

As the mobile 2 travels through cell A, it receives a maximum RSS as depicted by section 74 of the graph. It enters the tunnel mouth 72 and then experiences a rapid fall in the RSS as depicted by section 75 of the graph.

This rapid fall off causes the processor 20 to access the preference table shown in Figure 5. It then selects site J to establish connection to. Connection is established and the RSS rises to a maximum because the mobile is now working to cell J. This is represented by section 76 of the graph.

The base-site serving the cell J transmits the new preference table illustrated in Figure 6 during section 76. This table is held in memory and selected upon the rapid fall off in the RSS as the mobile 2 leaves the tunnel at mouth 73. This is depicted by region 77. The mobile then attempts to establish connection to cell A since this is the next cell in the preference table. Connection fails because the mobile is out of coverage of that cell. Therefore the next cell is selected from the preference table which is cell D and as can be seen from Figure 7 this is the appropriate cell and the connection is established. The RSS then rises to the maximum value and this is depicted by Section 78 of the graph. The mobile then downloads a new preference table from the base-site serving cell D.

Thus it will now be appreciated that the system operates in the following way. Upon entering a cell a mobile is provided with a first preference table containing cells where the rate of change of RSS will be relatively slow and a further preference table of cells to be selected should the rate of change of RSS be high. (In this embodiment it changes by dropping abruptly.)

In alternative embodiments of the invention one preference table could be provided with a pointer being used to access a subset of the table providing the set of cells to be utilised in the event of a rapid change of RSS.

Whilst in the described embodiment the cell J serves a tunnel it could in alternative embodiments serve some other area having a rapid signal strength fall off such as a valley or a built-up area where a particular building or set of buildings causes poor signal reception.

In the described embodiment the radio was a mobile radio including a receiver and transmitter. The invention is also applicable to radios only having a receiver.

It should also be appreciated that although in the specific embodiment the "special" list includes a poor reception area cell it could also include "normal" cells. The "special' list could include more than one poor reception area cell such as a number of cells serving different tunnels for example both J and K in the described embodiment.

It should be further appreciated that the order in the list or lists need not be static and the list might be re-ordered, for example, by placing the cells in order of RSS.

## Claims

**1.** A method of base-site selection in a radio communication system comprising determining a rate of received signal strength variation and selecting a base-site from a set of potential base-sites in accordance with the determined rate.

**2.** A method of base-site selection for use in a radio communication system comprising a plurality of base-sites and at least one mobile radio unit which method comprising:
providing a set of potential base-sites with which the mobile radio unit may establish communication;
determining a rate of change of a received signal strength for
signals between the base-site and the mobile radio unit;
ordering the set of potential base-sites into an order in response to the determined rate; and
attempting to communicate between the mobile radio unit and at least one of the set by successively attempting to establish communication in the order.

**3.** A method as claimed in claim 2 wherein at least two sets of potential base-sites are provided and the set to be utilised is selected with reference to the determined rate.

**3.** A method of base-site selection for use in a radio communication system substantially as hereinbefore described with reference to and as illustrated by the drawings.

**4.** A radio for use in a communications system including a plurality of base-sites which radio comprising:
a received signal strength indicator for providing a signal representative of the received signal strength of a selected base-site;
a rate of change detector operably coupled to the received signal strength indicator to provide a measure representative of the rate of change of the received signal strength; and
a base site selector operably coupled to the rate of change detector to select a base-site to be utilised for communication in response to the rate of change of the received signal strength.

**5.** A radio substantially as hereinbefore described with reference to, and as illustrated by, the drawings.
